# EUROPEAN PATENT SPECIFICATION

(11) **EP 3 390 727 B1**
(45) Date of publication and mention of the grant of the patent: **24.02.2021**
(21) Application number: 16831918.4
(22) Date of filing: 16.12.2016
(51) Int. Cl.: E01F 15/14, F16F 7/12

(54) **SET OF IMPACT ATTENUATORS**
SATZ VON AUFPRALLDÄMPFERN
ENSEMBLE D'ATTÉNUATEURS DE CHOC

(30) Priority: 18.12.2015 PL 41537815; 15.12.2016 PL 41982116
(43) Date of publication of application: 24.10.2018
(73) Proprietor: GP Spolka z Ograniczona Odpowiedzialnoscia, 70-784 Szczecin (PL)
(72) Inventor: WASZCZUK, Krzysztof, 70-896 Zalom (PL); GOSCINSKI, Karol, 72-005 Kolbaskowo (PL)
(74) Representative: Hudy, Ludwik
(86) International application number: PCT/IB2016/057739
(87) International publication number: WO 2017/103890

(56) References cited:
- WO-A1-2012/074480
- GB-A- 1 601 809
- US-A- 2 578 903
- US-A1- 2004 217 581
- US-B2- 7 690 687

## Description

The subject of the invention is a set of impact attenuators used to prevent exceeding deceleration loads dangerous for humans due to insufficient vehicle slowdown before an obstacle on a road, for example, during road works, or in those places where a traffic lane ends for all vehicles, including wheeled vehicles, running both on roads and on railroads. The set of impact attenuators can also be a mobile structure fitted particularly to trucks or rail vehicles to reduce vehicle damage during any collision.

The set of impact attenuators allow, when mounted together, for deceleration of huge mass vehicles travelling at high speed.

The well known impact attenuators occur mostly in form of immobile rail or road barriers situated on ending terminals or at the beginning of traffic lanes excluded from the operation, or as mobile structures mounted on trucks or attached to other vehicles present on the roads.

Some of impact attenuators are support structures TMA (Truck Mounted Attenuator), elements of which are attached directly to special adapters of trucks. The adapters of this type are made considering parameters of given manufacturer and sold together with an equipment of TMA. The equipment of TMA can be a dedicated set of actuators and jacks, mainly hydraulic ones, in order to fold up the TMA when the truck, on which the impact attenuators are mounted, is moving.

Other well-known impact attenuators are attached structures, type of TTMA structures (Trailer Truck Mounted Attenuator), whereby attenuating elements are attached to a truck by means of a hook having a minimum load-carrying capacity defined by the manufacturer. The most popular models are intended for attenuation of crashes up to the speed of 100 km/h. The laws of physics impose at such a speed that the minimum length of the attenuating structure amounts about 4 m to safely stop a wide gamut of passenger vehicles without exceeding gravity loads dangerous for humans specified in standards, for example EN 1317, MASH or NCHRP 350.

Currently existing embodiments are based on plastic strain of tubular elements, used simultaneously as a TMA type's supporting structure. Such type embodiments were disclosed, for instance, in patent descriptions of US 8,276,956, US 7,690,687, US 8,074,761.

One of such mobile structures of an impact attenuator, which is attached to a vehicle, is presented in US 2016/0167468 A1 publication of the patent application description titled "Trailer mounted crash attenuator". This impact attenuator has an anti-rotational attachment system having an internal supporting tube and external supporting tubes. The internal supporting tube has a connector on its front end for attaching to a hook of vehicle. Both, the internal tube and the external tubes comprise telescopic structures. A frame is disposed on a rear end of a hitch system to which an attenuator is attached to an axle with wheels. When the vehicle with the attached, above described, mobile impact attenuator is hit by another vehicle, the mobile impact attenuator is in most cases damaged in such a degree that it cannot be reused.

In other known solutions plastic deformation can occur, for example, through compression or bending and in such a case initiation of one of the tubular section walls is required, wherein firstly the tubular section becomes slightly flattened and then is bent at a specific angle, as disclosed in the patent description of US 8,074,761.

In still another embodiments, plastic deformation can occur, for example, by a propagation of crack, wherein, in this specific case the section is often weakened by making wall furrows to control the propagation course of cracks, as described in the patent description US 7,690,687.

Another applied embodiment is plastic deformation of segments, for example in honeycomb-shape, made in most cases of aluminum, as in the publication of the patent application of EP 2743536A1. Similar embodiment has been disclosed in US 6,098,767 description. In these embodiments, the impact attenuating parts are not self-supporting and are additionally encased inside a metal shell.

In still another embodiments, for dissipating impact energy can be used plastic deformation of segments made of a thick-walled paper.

There are known also TMA type's structures, wherein a screws shearing mechanism is used, although in such case free space under the truck is required because the guides shearing the said screws must hide there.

In the described embodiments deformations of closed section are applied, and without any doubts such sections are more difficult and more expensive to manufacture as compared to open sections. Furthermore, TMA type's structures during collision are significant damage or often complete damage and majority of their elements cannot be re-used.

Next, deformation of open sections is used in the field of fixed steel road barriers, as it was disclosed, for example, in US Patent 5,078,366. In the foregoing embodiment is used mechanical deformation of energy-absorbing barriers in the shape of the letter "W" caused by a deforming element, so-called terminal, located at the end barrier section. This embodiment is not, however, used as mobile structures mounted, for example, on trucks.

Publication of UK Patent Specification GB 1 601 809 A titled "Linear arrestors" teaches an arrestor for stopping or slowing the vehicle in a portion of the path. The arrestor comprises a flat strip of ductile material extending in the direction of the path in which the arrestor is to operate. The strip has width greater than thickness and of uniform thickness across its width and is threaded through a set of not more than five rollers carried on a frame for plastic deformation of successive elements of the strip around the rollers when the strip is moved through the set of rollers during an arresting operation. Spacing between adjacent roller surfaces is greater than the strip thickness, the axes of all rollers in the set being fixedly located on said frame and with respect to each other. The rollers continuously maintain a portion of the strip in a deformed condition and the maximum deformation of successive elements of the strip during relative strip-roller movement is constant. The arrestor is mounted on the vehicle or a stationary structure and has one end of its frame and the leading ends of two strips in parallel secured thereto whereas the other of the frame and the strips leading ends are engageable by the stationary structure or vehicle respectively as the vehicle reaches the said portion of the path.

In turn, Publication of Patent Specification US2 578 903 A titled "Shock absorber" presents a shock absorber in which energy of impact of two parts moving towards each other is absorbed by the strain energy due to bending a strip of ductile metal. The shock absorber comprises one part having a pair of spaced supports and a mild steel strip extending between the supports and being bent around and extending beyond curved surfaces of the supports. Furthermore, the shock absorber comprises another part consisting of means movable upon impact to engage said one part and move the strip around the curved surfaces of the supports to stress the steel of the strip beyond its elastic limit and absorb the energy of impact.

Another solution is known from Publication of Patent Application US 2004/0217581 A1 titled "Energy absorber for motor vehicle steering column" that may be used with the motor vehicle steering column of a motor vehicle. The steering column includes a tubular mast jacket and a steering shaft. The tubular mast jacket has an upper end and a lower end. The steering shaft is located and rotatable within the mast jacket. The mast jacket and steering shaft are centered along a longitudinal center line. The mast jacket further includes an outer jacket with a top line parallel to the center line and located at a top of the mast jacket. Furthermore, the energy absorber includes a sleeve and a lower mounting bracket. The sleeve has a first end and a second end and forms a sleeve bore for receiving the lower end of the mast jacket. The lower mounting bracket is mounted on a body structure of the motor vehicle and defines a lower mounted bracket bore for receiving the second end of the sleeve. The energy absorber further includes a convex anvil located on at the second end of the sleeve, and generally being centered along the top line. A generally J-shaped strap having first and second legs and a concave web therebetween is generally centered along the top line. The concave web bears against the convex anvil. The first leg is coupled to the lower mounting bracket.

Furthermore, the one of the known impact attenuators is shown in Publication of International Patent Application WO 2012/074480 A1 titled "Impact attenuator for vehicles" that has an energy absorbing device for decelerating forces comprising a housing, at least two pins arranged in the housing which are arranged in parallel to each other in the housing, as well as a metallic, elongated draw element, which can be positioned within the housing such that it extends between and in contact with the pins, wherein the pins and the draw element are positioned such that a change of direction appears on the draw element when passing by each pin such that at mutual moving of the draw element and the housing in relation to each other, the movement is decelerated due to deformation of the draw element at passage of each pin. The pins and the draw element of said impact attenuator are positioned such that the draw element obtains a change of direction of at least 90° when passing at least two of the pins. Furthermore, the impact attenuator comprises a beam and a collision catcher, which is connected to the beam and displaceable along its outer side, wherein one of the energy absorbing device or the draw element is connected to the collision catcher and displaceable together with it, while the other of these is fixedly connected to the ground or a fixed structure such that at a possible collision with the collision catcher, this is decelerated due to the mutual movement between the energy absorbing device and the draw element.

The aim of the invention is to create a set of impact attenuators comprising at least two impact attenuators connected together having a simple construction. It would be advisable that after impact of an errant onto a moving vehicle the set of impact attenuators could be reused, if not fully, then at least partly, particularly its main supporting element.

According to the invention, a set of impact attenuators comprises at least two impact attenuators connected together, each having a deformable element with a first end and a second end as well as a deformable element deformation system having a casing with an empty space and a guide sliding along the casing, whereby a part of the deformable element is located in the empty space of the casing whereby the deformable element at the first end located outside the empty space of the casing has a grip to fix to the guide whereas the second end of the deformable element is free and between the first end and the second end of the deformable element there is a bend with a deformation zone of the deformable element, which translocates during pulling out of the deformable element from the casing during moving of the guide in relation to the casing of the deformable element and each transversal cross-section of the deformable element in every point of a pulled out part of the deformable element is selected in such a way that value of a force causing pulling out of the deformable element from the casing and its deformation occurring at an outlet of the empty space of the casing is lower than value of a force that would cause tearing off of the deformable element and a cross-section of a compressed part of the casing in each its point is selected in such a way that value of the force causing pulling out of the deformable element from the casing and its deformation occurring at the outlet of the empty space of the casing is lower than value of a force which would cause deformation of the casing of the deformable element. The set described above has pairs of impact attenuators connected in parallel, the guides of the impact attenuators forming a first pair being connected together via a front connecting beam adapted to be connected to a hitch system, whereas the casings of their deformable elements of the first pair of attenuators are connected together via a middle beam, to which are attached guides of impact attenuators of a next pair of attenuators, whereas the casings of the deformable elements of the next pair of the attenuators are connected together via elements of a rear impact system or, alternatively, connected together via a next middle beam to which are attached the guides of the impact attenuators of a further pair of attenuators, whereby the casings of the further pair or last pair of the impact attenuators are connected together via elements of the rear impact system.

The set of the impact attenuators can additionally comprise a central pair of the impact attenuators connected together and inserted between a pair of the impact attenuators of the hitch system having guides joined together by elements of the hitch system and a pair of the impact attenuators of the impact system having ends of casings connected together by the set of rear beams connected together by the vertical connectors.

Preferably, the impact attenuator of pair of the attenuators has one deformable element.

The impact attenuator of the pair of the attenuators can have more than one deformable element.

Preferably, the casing is a profile having a cross-section shape selected from simple geometric figures, their fragments and figures formed from combination of fragments of simple geometric figures.

In addition, the deformable element is a flat profile or a profile having a cross-section shape selected from simple geometric figures, their fragments and figures formed from combination of fragments of simple geometric figures and is dimensioned to enable movement of the deformable element in the casing empty space.

The guide is a profile having a cross-section shape selected from simple geometric figures, their fragments and figures formed from combination of fragments of simple geometric figures and is shaped and dimensioned to enable movement of the guide in respect to the casing.

Preferably, the deformable element has a pre-bent end, to which a grip is attached.

In addition, at the outlet of the empty space of the casing is located an actuating element, around which the deformable element is being bent.

Furthermore, in the empty space of the casing is located a guiding element for the deformable element.

Preferably, handles for fixing thereto elements of a hitch system or an impact system are fixed to the casing of the deformable element and to the guide.

Furthermore, the handles for fixing to them elements of the casing of the deformable element or the guide of another impact attenuator are fixed to the casing of the deformable element and to the guide.

In addition, the casing of the deformable element have more than one empty space, in each one of which is located the deformable element fixed at its first end to one guide displaceable relative to the casing.

Advantageous effects of the present invention is possibility to use an easy to manufacture and relatively inexpensive open section which is deformed by absorbing the impact energy. In the case of the described solution when a central impact of vehicle occurs it is possible to re-use most of the structural elements of the attenuator. The set of the attenuators connected together to form an impact construction when folded takes up relatively little space that allows easy transport.

The object of the invention has been presented in the accompanying drawing in which
Fig. 1 shows an axonometric view of an impact attenuator with a deformable element situated in a casing or housing relative to which a guide with fixing grip or handle is moveable,
Figs. 2, 3, 4, 5, 6 and 7 show exemplary cross-sections of the deformable element,
Fig. 8 shows an axonometric view of the deformable element, Fig. 9 shows an axonometric view of two impact attenuators arranged in one casing and making, together with the casing and the guide, a set of impact attenuators,
Fig. 10 shows a C-C plane marked longitudinal cross-section of the set of the impact attenuators shown in Fig. 9,
Fig. 11 shows a transversal cross-sections along a D-D line of the set of the impact attenuators shown in Fig. 10,
Figs. 12, 13, 14 and 15 show exemplary transversal cross-sections of the deformable element casing along a B-B line marked, for example, in Fig. 10,
Fig. 16 shows an axonometric view of the guide,
Figs. 17, 18, 19 and 20 show exemplary transversal cross-sections of the guide along an E-E line marked for example in Fig. 16,
Fig. 21 shows an axonometric view of the set of the impact attenuators deformable elements of which have been deformed after impact of a moving vehicle,
Fig. 22 shows an axonometric view of a set of impact attenuators arranged in a series configuration,
Fig. 23 shows an axonometric view of a set of impact attenuators arranged in a parallel-series configuration according to the invention, and
Fig. 24 shows an axonometric view of another embodiment of a set of impact attenuators arranged in a parallel-series configuration according to the invention.

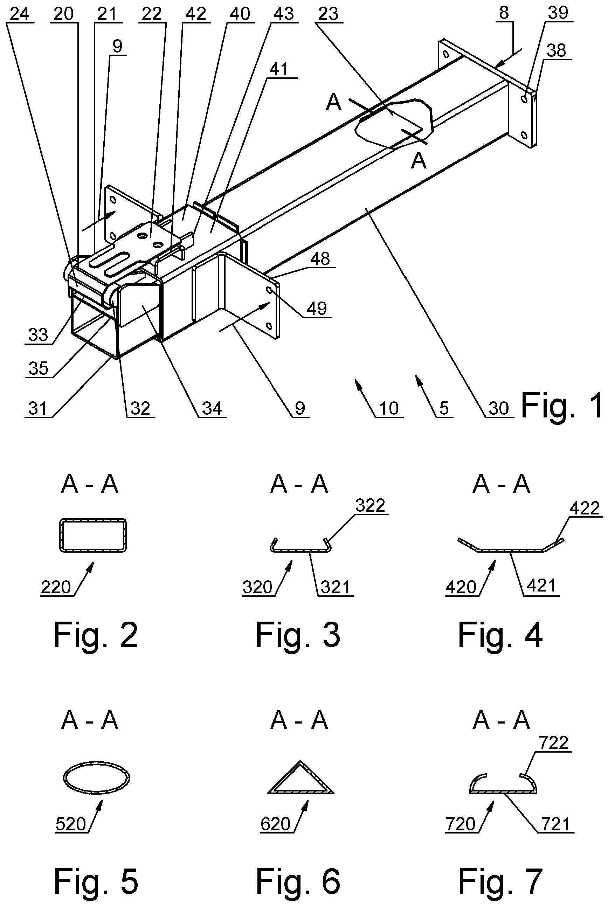

A crash impact attenuator or an impact attenuator 10 shown in Fig.1, comprises a deformable element 20 with its first end, which is a pre-bent end 21, a second end 23 and a deformation system 5 of the deformable element 20. The deformable element is deformed by forces acting on it via the deformation system 5. The deformation system 5 has a casing 30 with an empty space 31 and a guide 40 sliding along the casing 30. The guide can be provided with fixing elements 42 and elements 43 stiffening a brace of the guide. On side walls of the brace 41 can be located grips or handles 48 with holes 49 for bolts for fixing thereto a hitch system and an impact system. As it appears from Fig. 1, a part of the deformable element 20 is located in the empty space 31 of the casing 30 whereas the deformable element 20 at the first end 21 located outside the empty space 31 of the casing 30 has a grip 22 to fix it to the guide 40. The second end 23 of the deformable element 20 is free, that mean it is not fixed to any other element of the impact attenuator 10 and may move freely. Between the first end 21 and the second end 23 of the deformable element 20 there is a bend with a deformation zone 24 of the deformable element 20. The impact attenuator 10 has forcing elements 32 in form of rollers that facilitate the deformable element bending. Walls of the casing shown in Fig. 1 are strengthened with side plates 34 and kept at a specific distance between them using separation walls 35. During pulling out of the deformable element from the casing 30 during moving of the guide 40 in relation to the casing 30 occurs straightening of the bent part and a new bend is formed in every new place of the deformable element and translocated in relation to a place where it has been formed before. It means that the bend is formed in a new location and the deformation zone 24 of deformable element 20 translocates and is located always at an outlet 33 of the deformable element 20 from the empty space 31. In one embodiment of the impact attenuator moving or displacement of the guide in relation to the attenuator casing is caused by forces applied in a way shown in Fig. 1 by arrows 8, 9 to elements of the impact attenuator, for example handles 38, 48 with openings for connecting elements 39, 49, respectively, for fixing the hitch system and the impact system thereto. The deformation of the deformable element 20 in the embodiment shown in Fig. 1 is evoked or happens, first and foremost, due to bending of the deformable element 20. In one of the embodiments, during action of the forces on the deformable element, for example by pulling of its first end, its first end moves into different direction compared to direction of movement of the second end of the deformable element. In one of preferred embodiments, when the deformable element of the impact attenuator is not a flat bar but, for example, a closed or open section, their parts that are unbent from the plane in which a main wall of the deformable element is moved, are pressed towards the main wall of the deformable element and are bent together with the main wall, resulting in increase of resistance to the deformation of the deformable element 20 and higher deforming forces applied to the impact attenuator are required in comparison to an attenuator of similar dimensions but having its deformable element in form of the flat bar. Designing the impact attenuator, it was assumed that in the event of occurrence of any loads for action of which given impact attenuator was calculated and designed, caused by collision of moving vehicle and a barrier or any other obstacle or a vehicle intended for stopping of other vehicles equipped with the impact attenuator, only the deformable element should be deformed whereas the casing and the guide should be not damaged and can be reused for making of a new impact attenuator. To reach an aim that in the embodiment of Fig. 1, only the deformable element 20 be deformed, or such deformable element be deformed firstly in the event of occurrence of loads exceeding the assumed ones, a transversal cross-section of the deformable element 20 in every point of a pulled out part of the deformable element 20 should be selected in such a way that a value of a force causing pulling out of the deformable element 20 from the casing 30 and its deformation occurring at the outlet 33 of the empty space 31 of the casing 30 has to be lower than a value of a force that would cause tearing off of the deformable element 20. This means that the deformable element 20 has to be deformed only or has to be deformed first of all when loads exceed the assumed ones, but not the casing 30 or another elements. In turn, a cross-section of a compressed part of the casing 30 in each its point should be selected in such a way that a value of the force causing pulling out of the deformable element 20 from the casing 30 and its deformation occurring at the outlet 33 of the empty space 31 of the casing 30 has to be lower than a value of a force which would cause deformation of the casing 30 of the deformable element 20. Always forces that act during collision can be determined knowing momentum of the vehicle involved in the collision. In the case of vehicles having low mass moving at high speed, for example cars, it is desirable that forces causing deformation of the deformable element are smaller than forces that cause deformation of the deformable element occurring at collision of vehicles having high mass and moving at a slower speed, for example a truck or rail vehicle. This is because of the fact that braking of vehicles moving at high speed, for example above 200 km/h, should occur at a long distance, which determines the length of the elements of the impact attenuator to avoid overload dangerous for persons moving in vehicles involved in the collision. Thus, the dimensions of the impact attenuator, in particular the dimensions of the deformable element, particularly its cross-section dimensions and length, should be selected depending on the expected weight and speed of the vehicles involved in the collision.

Figs. 2, 3, 4, 5, 6 and 7 show exemplary transversal cross-sections of deformable element 220, 320, 420, 520, 620 and 720, however, in Figs. 2, 5 and 6 transversal cross-sections of simple geometrical figures, such as rectangle, oval and triangle, are shown. On the other hand, Figs. 3, 4 and 7 show cross-sections of the deformable element 320, 420 and 720 featuring closed sections shape, side walls 322, 422 and 722 of which are pressed first of all and then middle walls 321, 421 and 721, respectively, together with them are bent during deformation of given deformable element. However, it should not be assumed that the deformable element may have only such sections as those shown in Figs. 2, 3, 4, 5, 6 and 7 because those sections may have shape of any geometrical figure, or parts of any geometrical figure, or combination thereof, and the deformable element may have parts differing in transversal cross-sections.

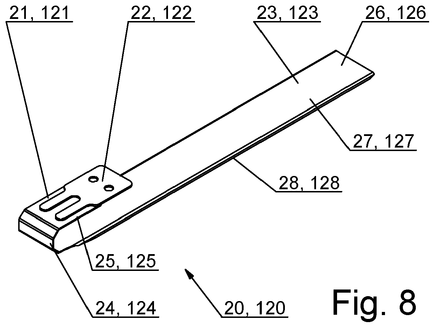

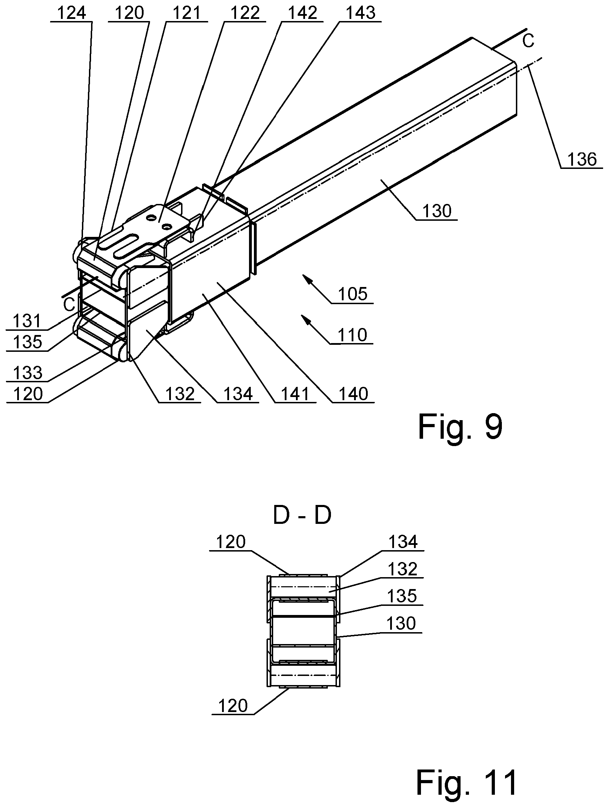

Fig. 8 shows an axonometric view of a deformable element 120 with its bent part 125. The deformable element 120 has shape of a channel bar and is a part of an impact attenuator 110 shown, for example, in Fig. 9, which may be defined as a set of the impact attenuators having parallel configuration. The deformable element 120 has a first end 121 and a second end 123, a deformation zone 124 of the deformable element 120 and side walls 128 going away from a middle wall 127 having an end 126. Likewise, it may look the deformable element 20 of the impact attenuator shown in Fig. 1 having a shape of a flat bar, which has a bent part 25 and a flat middle wall 27 having an end 26, but without side walls 28.

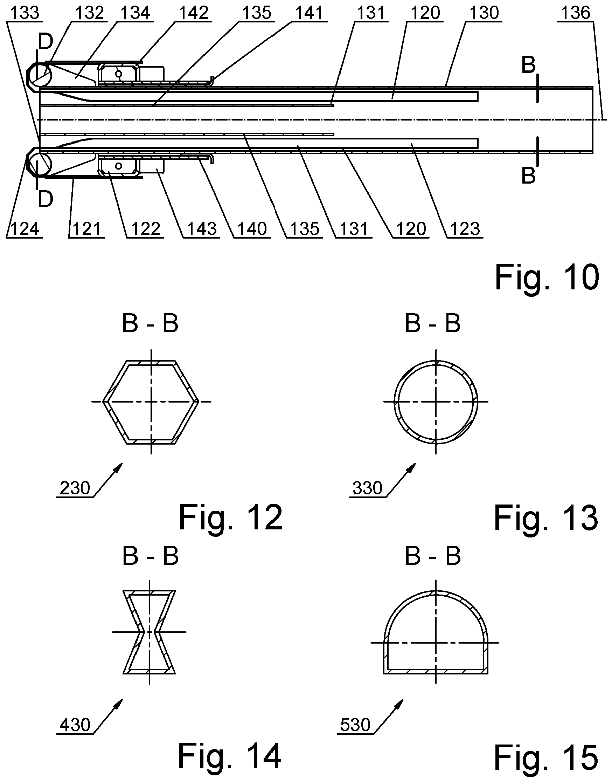

The impact attenuator 110 is shown in the aforementioned Fig. 9 and also in Fig. 10, where is shown a longitudinal section made in a vertical plane and passing through a longitudinal axis 136 of symmetry of the impact attenuator having more than one empty space 131, each of which is surrounded by walls of a casing 130 and a guide element 135 of the deformable element, which in other embodiments is not present. The deformable elements situated in the casing have one common empty space. The first ends 121 of both deformable elements are fixed to a single guide 140 and forces acting on this attenuator cause simultaneous sliding out of both deformable elements 120 from their casings, in the form of the one-piece casing 130, in the shape of a hollow quadrangular cross section, and their deformation. Reference numbers of the same elements of the impact attenuator shown in Fig. 1 and the elements of the impact attenuators shown in Fig. 9 are similar but reference numbers of the impact attenuator shown in Fig. 9 are preceded additionally by "1".

In turn, Fig. 11 shows a transversal cross-section of the set of the impact attenuators made along D-D line which was marked in Fig. 10. In particular, in Fig. 11 are shown forcing elements 132 having shape of a roller for easier bending of the deformable element. In this embodiment, the forcing elements are located at an outlet 133 from the empty space 131 of the casing 130. In order to further reduce any bending resistance, the forcing elements in another embodiment, may be rotatably mounted in opposite walls of the casing. Casing walls shown in Fig. 11 are strengthened by side plates 134 and are kept at a specific distance between them using separation walls 135. Similar elements can be mounted in other embodiments.

In another embodiment, the impact attenuator can have more than two deformable elements arranged in a single profile of which, for example, third deformable element may be formed in the empty space, for example, formed between the guide elements 135 of the deformable element. In this case, a middle wall of the deformable element is oriented vertically, a first end of the deformable element is fixed in the side of the guide.

Figs. 12, 13, 14 and 15 show exemplary transversal cross-sections of the casing of the deformable element or the deformable elements casing made along line B-B marked for example in Fig. 10. The casing has the empty space or an empty chamber formed inside, each of which extends along the direction of movement of the deformable element, which has in its transversal cross-section such a shape that allows the deformable element to move freely. The transversal cross-sections of the casing, as shown in Figs. 12, 13, 14 and 15, have simple figure shapes, for example, polygons or rounded figures or a geometrical figure made up from parts of any geometrical figure or combination of pieces of any geometrical figure. The casing in the most common embodiments is a pipe or a hollow profile of the cross-sections previously described. In other embodiments the casing is cut open along pipe or a closed profile of the cross-sections previously described.

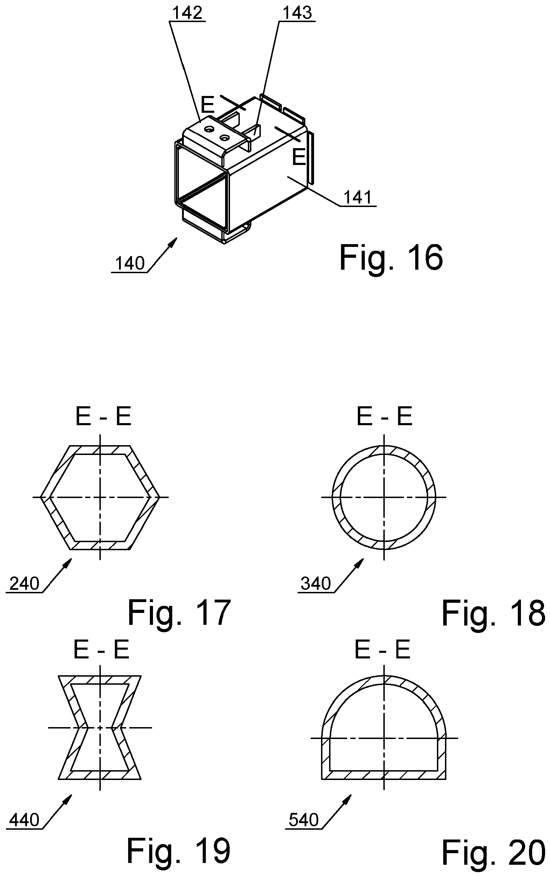

Fig. 16 shows an axonometric view of the guide 140 and Figs. 17, 18, 19 and 20 show exemplary transversal cross-sections of the guide made along line E-E indicated, for example, in the earlier mentioned Fig. 16. In its simplest form, the guide has a shape of a brace made of a flat bar or sheet 141 and may have a shape of a profile, which can be shaped, in its cross-section, as a closed or open figure. The guide has inside space, which is dimensioned and shaped to enable movement of the guide in respect to the casing. The transversal cross-sections of the guide, as shown in Figs. 17, 18, 19 and 20, have simple figure shapes, for example polygons or rounded figures or a geometrical figure made up from fragments of any geometrical figure, or combination of fragments of any geometrical figure. The guide can be equipped with fixing elements 142 and stiffening elements 143 of the brace 141.

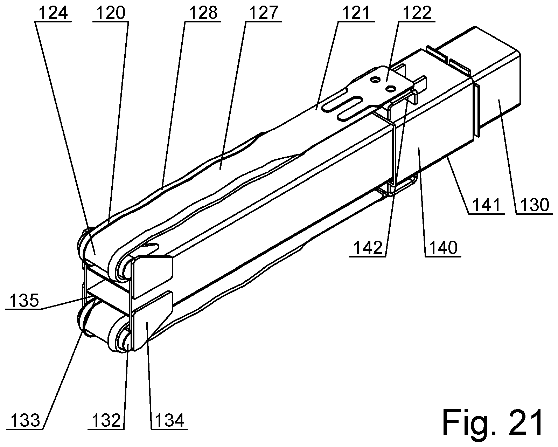

Fig. 21 shows a set of impact attenuators, deformable elements of which have been deformed after impact of a moving vehicle. In this example of embodiment is shown that only the deformable element 120 was deformed with side walls 128, going away from the middle wall 127, being pressed to the middle wall 127 during bending and deformed in the deformation zone 124 of the deformable element 120 together with the middle wall during pulling out of the deformable element from the casing 130.

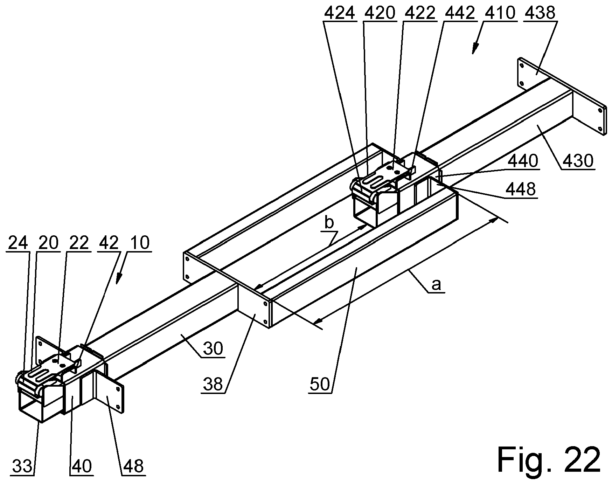

In turn, Fig. 22 shows an axonometric view of a set of impact attenuators arranged in a series configuration. In this embodiment, the casing 30 of the impact attenuator is fixed with the grip 38 and longitudinal beams 50 to handles 448 of a guide 440 of an impact attenuator 410, a guide of which has a fixing element 442. Just like the impact attenuator 10, shown also in Fig. 1, the impact attenuator 410 has a deformable element 420 with a grip 422 and a deformation zone 424 of the deformable element 420 whereas to a casing 430 a handle 438 has been fixed. In the event that the deformable element 420 should be fully deformed firstly, a distance b between the handle 38 and an outlet of an empty space of the casing 430 should be equal to a length of a working part of the deformable element, corresponding to a length established by a manufacturer of a maximum displacement of the guide relative to the casing and is equal to a distance reduced by a distance between the handle 448 and the outlet of the empty space of the casing 430, and a value of a force which would cause deformation of the deformable element 420 should be lower than value of a force which would cause deformation of the deformable member 20.

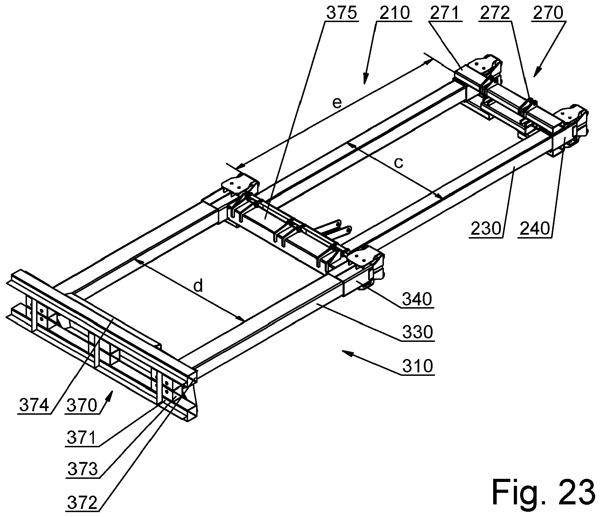

Fig. 23 shows a set of impact attenuators having a parallel-series configuration, which can absorb higher impact energy than a single set of impact attenuators. In the embodiment shown in Fig. 23, two pairs of the impact attenuators are connected in such a way that guides 240 of impact attenuators 210 making a pair are connected with a front connecting beam 271, with catches 272 of a hitch system 270 and ends of casings 230 of deformable elements are connected with a middle beam 375, at ends of which guides 340 of impact attenuators 310 are fitted. By the end of the casing of each of the deformable element should be regarded a fragment of the casing, which is located at the opposite side of the casing relative to an outlet of an empty space. In turn, ends of casings 330 of deformable elements of this pair of attenuators are connected by a set of rear beams 371, 372 of a rear impact system 370 connected with vertical connectors 373 and strengthening beam 374. If higher number of the attenuator pairs is used, such impact attenuator pairs are connected in such a way that the guides of the impact attenuators being the first pair are connected together by the elements of the hitch system and the casings of their deformable elements are connected with a middle beam to which are fixed the guides of the impact attenuators of the next attenuator pairs and the casings of the deformable elements of the next attenuator pair are connected with the next middle beam to which are fixed the guides of the impact attenuators of the next attenuator pair, whereas the casings of the last pair of the impact attenuators are connected together via elements of the rear impact system. In the case of the embodiment shown in Fig. 23 the deformable elements of the pair of the attenuators 310 should be fully deformed firstly, a distance e should be equal to a path length of the maximum movement of the impact system 370 relative to the middle beam 375, and a dimension d should be greater than a dimension c and value of a force which would cause deformation of the deformable elements of the pair of the attenuators 310 should be less than a force which would cause deformation of the deformable elements of the pair of the attenuators 210.

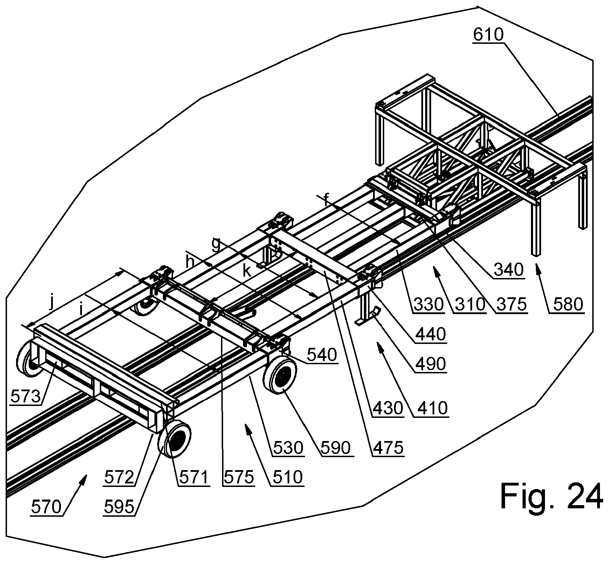

Fig. 24 shows a set of impact attenuators comprising three pairs of the impact attenuators, which may be used particularly in the rail, and which in this embodiment has a hitch system 580 positioned across a trackway 610 and anchored by means of fixed supports. In order to maintain long structure above the ground, the set of the impact attenuators is equipped with running systems 590, 595 and supports 490 with sliding shoes. Elements of the pairs of the impact attenuators 310, 410, 510 are positioned and dimensioned by distances f, g, h, i, j, k that depend on the weight of the rail vehicle, which will be involved in a collision and hit the set of the impact attenuators shown here schematically. The set of the impact attenuators shown in Fig. 24 includes, as compared to the set of the impact attenuators of Fig. 23, an additional middle pair of the impact attenuators 410 connected together and inserted between the pair of the impact attenuators 310 of the hitch system 580 having the guides 340 connected together by elements of the hitch system 580, and a pair of the impact attenuators 510 of an impact system 570. Ends of casings 530 of the impact attenuators 510 are interconnected by a set of rear beams 571, 572 joined by vertical connectors 573. Describing more specifically, the pair of the impact attenuators shown in Fig. 24 are connected to each other in such a way that the ends of the casings 530 are interconnected by means of elements of the impact system 570 and the guides 540 of the impact attenuators 510 forming the pair are connected together by a middle beam 575, to which are fixed the ends of the casings 430 of deformable elements. To the center beam 475 are mounted guides 440 of the impact attenuators 410, to which are attached the ends of the casings 330 of the deformable elements of the impact attenuators 310. The guides 340 of the impact attenuators 310 are interconnected by a set of beams 375 of the hitch system 580.

The advantages of the described impact attenuator is its simple structure and easy replacement of the deformable element, which in the event of occurrence of forces generated during any collision and not exceeding the assumed forces, is the only one element, which shall be replaced to restore full functionality of the impact attenuator.

### LIST OF REFERENCE SIGNS

- 5: Deformable element of deformation system
- 8, 9: Arrows showing forces
- 10, 110, 310, 410, 510: Impact attenuator
- 20, 120 220, 320, 420, 520, 620, 720: Deformable element
- 21, 121, 321, 421, 721: First end
- 22, 122, 422, 722: Grip
- 23, 123: Second end
- 24, 124, 424: Deformation zone of deformable element
- 25, 125: Bent part
- 26, 126: Middle wall end
- 27, 127, 321, 421, 721: Middle wall
- 28, 128, 322, 422, 722: Side wall
- 30, 130, 230, 330, 430, 530: Casing
- 31, 131: Empty space or empty chamber
- 32, 132: Forcing element
- 33, 133: Outlet from empty space
- 34, 134: Side plate
- 35, 135: Separation wall or guide element
- 38, 48, 438, 448: Handle
- 39, 49: Openings for fixing a fixing element
- 40, 140, 240, 340, 440, 540: Guide
- 41, 141: Guide brace
- 42, 142, 442: Fixing element
- 43, 143: Element for stiffening a brace
- 50: Beam
- 136: Longitudinal axis of symmetry
- 270, 580: Hitch system
- 271: Front connecting beam
- 272: Catch
- 370: Rear impact system
- 371, 372, 571, 572: Set of rear beams
- 373, 573: Vertical connector
- 374: Strengthening beam
- 375, 475, 575: Middle beam
- 490: Supports with sliding shoes
- 570: Impact system
- 590, 595: Running system
- 610: Trackway

## Claims

1. A set of impact attenuators comprising at least two impact attenuators connected together, each having a deformable element with a first and a second end as well as a system for deformation of the deformable element having a casing with an empty space and a guide sliding along the casing, whereby the deformable element (20, 120, 220, 320) is located in the empty space (31, 131) of the casing (30, 130, 230, 330) and the deformable element (20, 120, 220, 320) at the first end (21, 121, 321) located outside the empty space (31, 131) of the casing (30, 130, 230, 330) has a grip (22, 122) to fix to the guide (40, 140, 240, 340), whereas the second end (23, 123) of the deformable element (20, 120, 220, 320) is free and between the first end (21, 121, 321) and the second end (23, 123) of the deformable element (20, 120, 220, 320) there is a bend with a deformation zone (24, 124) of the deformable element (20, 120, 220, 320), which translocates during pulling out of the deformable element (20, 120, 220, 320) from the casing (30, 130, 230, 330) during moving of the guide (40, 140, 240, 340) in relation to the casing (30, 130, 230, 330) of the deformable element (20, 120, 220, 320) and each cross-section of the deformable element (20, 120, 220, 320) in every point of a pulled out part of the deformable element (20, 120, 220, 320) is selected in such a way that value of the force causing pulling out of the deformable element (20, 120, 220, 320) from the casing (30, 130, 230, 330) and its deformation occurring at an outlet (33, 133) of the empty space (31, 131) of the casing (30, 130, 230, 330) is lower than value of the force that would cause tearing off of the deformable element (20, 120, 220, 320) and the cross-section of a compressed part of the casing (30, 130, 230, 330) in each its point is selected in such a way that value of the force causing pulling out of the deformable element (20, 120, 220, 320) from the casing (30, 130, 230, 330) and its deformation occurring at the outlet (33, 133) of the empty space (31, 131) of the casing (30, 130, 230, 330) is lower than value of the force which would cause deformation of the casing (30, 130, 230, 330), whereby the set has pairs of the impact attenuators connected in parallel, the guides (240) of the impact attenuators (210) forming a first pair being connected together via a front connecting beam (271) adapted to be connected to a hitch system (270), whereas the casings (230) of their deformable elements of the first pair of attenuators are connected together via a middle beam (375), to which are attached guides (340) of the impact attenuators (310) of a next pair of attenuators, whereas the casings (330) of the deformable elements of the next pair of the attenuators are connected together via elements of a rear impact system or, alternatively, connected together via a next middle beam to which are attached the guides of the impact attenuators of a further pair of attenuators, whereby the casings of the further pair or last pair of the impact attenuators are connected together via elements of the rear impact system.

2. The set of the impact attenuators according to claim 1, wherein the set comprises additionally a middle pair of the impact attenuators (410) having the impact attenuators (410) connected to each other and disposed between the pair of impact attenuators of a hitch system (580), the guides (340) of which are connected each other using elements of the hitch system (580), and the pair of the impact attenuators (510) of a rear system (570), the casing (530) ends of which are connected each other using a set of rear profiles (571, 572) connected each other by connectors (573).

3. The set of the impact attenuators according to claim 1, wherein each impact attenuator of the pair of the attenuators has one deformable element.

4. The set of the impact attenuators according to claim 1, wherein each impact attenuator (210, 310, 410, 510) of the pair of the attenuators have more than one deformable element.

5. The set of the impact attenuators according to claim 1, wherein the casing is a profile having a cross-section shape selected from simple geometric figures, their fragments and figures formed from combination of fragments of simple geometric figures.

6. The set of the impact attenuators according to claim 5, wherein the deformable element (20, 120, 220, 320, 420, 520, 620, 720) is a flat profile or a profile having a cross-section shape selected from simple geometric figures, their fragments and figures formed from combination of fragments of simple geometric figures and is dimensioned to enable movement of the deformable element in the casing empty space.

7. The set of the impact attenuators according to claim 5 or 6, wherein the guide (40, 140, 240, 340, 440, 540) is a profile having a cross-section shape selected from simple geometric figures, their fragments and figures formed from combination of fragments of simple geometric figures and is shaped and dimensioned to enable movement of the guide in respect to the casing.

8. The set of the impact attenuators according to one of claims from 5 to 7, wherein the deformable element (20, 120, 220, 320, 420, 520, 620, 720) has a pre-bent end (21, 121, 321, 421, 721), to which the grip (22, 122, 422, 722) is attached.

9. The set of the impact attenuators according to one of claims from 5 to 8, wherein at the outlet (33, 133) of the empty space (131, 133) of the casing (30, 130, 230, 330, 430, 530) is located an actuating element (32, 132), around which the deformable element (20, 120, 220, 320, 420, 520, 620, 720) is being bent.

10. The set of the impact attenuators according to one of claims from 5 to 9, wherein in the empty space (131, 133) of the casing (30, 130, 230, 330, 430, 530) is located a guiding element (35, 135) for the deformable element (20, 120, 220, 320, 420, 520, 620, 720).

11. The set of the impact attenuators according to one of claims from 5 to 10, wherein handles (38, 48) for fixing thereto elements of a hitch system or an impact system are fixed to the casing (30) of the deformable element (20) and to the guide (40).

12. The set of the impact attenuators according to one of claims from 5 to 10, wherein the handles (38, 48) for fixing to them elements of the casing (30) of the deformable element (20) or the guide (40) of another impact attenuator are fixed to the casing of the deformable element and to the guide.

13. The set of the impact attenuators according to one of claims from 5 to 10, wherein the casing (130) of the deformable element (120) has more than one empty space, in each one of which is located the deformable element (120) fixed at its first end (121) to one guide (140) displaceable relative to the casing (130).

## Patentansprüche

1. Ein Satz von Aufpralldämpfern, bestehend aus mindestens zwei miteinander verbundenen Aufpralldämpfern, die jeweils ein verformbares Element mit einem ersten und einem zweiten Ende aufweisen, sowie ein System zur Verformung des verformbaren Elements mit einem Gehäuse mit einem Hohlraum und einer entlang des Gehäuses gleitenden Führung, wobei sich das verformbare Element (20, 120, 220, 320) im Hohlraum (31, 131) des Gehäuses (30, 130, 230, 330) befindet und das am ersten Ende (21, 121, 321) außerhalb des Hohlraums (31, 131) des Gehäuses (30, 130, 230, 330) befindende verformbare Element (20, 120, 220, 320) hat einen Griff (22, 122) zur Befestigung an der Führung (40, 140, 240, 340), während das zweite Ende (23, 123) des verformbaren Elements (20, 120, 220, 320) frei ist und zwischen dem ersten Ende (21, 121, 321) und dem zweiten Ende (23, 123) des verformbaren Elements (20, 120, 220, 320) gibt es eine Biegung mit einer Verformungszone (24, 124) des verformbaren Elements (20, 120, 220, 320), die sich beim Herausziehen des verformbaren Elements (20, 120, 220, 320) aus dem Gehäuse (30, 130, 230, 330) während der Bewegung der Führung (40, 140, 240, 340) gegenüber dem Gehäuse (30, 130, 230, 330) des verformbaren Elements (20, 120, 220, 320) verschiebt, und jeder Querschnitt des verformbaren Elements (20, 120, 220, 320) an jedem Punkt eines herausgezogenen Teils des verformbaren Elements (20, 120, 220, 320) wird so ausgewählt, dass der Wert der Kraft, die einen Herausziehen des verformbaren Elements (20, 120, 220, 320) aus dem Gehäuse (30, 130, 230, 330) und seiner Verformung an einem Auslass (33, 133) des Hohlraums (31, 131) von dem Gehäuse (30, 130, 230, 330) verursacht, niedriger ist als der Wert der Kraft, die zum Abreißen des verformbaren Elements (20, 120, 220, 320) und des Querschnitts eines komprimierten Teils des Gehäuses (30) führen würde, (130, 230, 330) in jedem seiner Punkte so gewählt ist, dass der Wert der Kraft, die das Herausziehen des verformbaren Elements (20, 120, 220, 320) aus dem Gehäuse (30, 130, 230, 330) verursacht, und seine Verformung, die am Auslass (33, 133) des Hohlraums (31, 131) des Gehäuses (30, 130, 230, 330) auftritt, ist niedriger als der Wert der Kraft, die eine Verformung des Gehäuses (30, 130, 230, 330) verursachen würde, wobei der Satz Paare der Aufpralldämpfer hat, die parallel verbunden sind, wobei die unter Verwendung von einem vorderen Verbindungsbalken (271) miteinander verbundene Führungen (240) der Aufpralldämpfer (210) ein erstes Paar bilden, das für den Anschluss an ein Kupplungssystem (270) geeignet ist, wobei die Gehäuse (230) ihrer verformbaren Elemente des ersten Dämpfungspaares unter Verwendung von einem Mittelträger (375) miteinander verbunden sind, an dem Führungen (340) der Aufpralldämpfer (310) eines nächsten Dämpfungspaares angebracht sind, wobei die Gehäuse (330) der verformbaren Elemente des nächsten Dämpfungspaares unter Verwendung von Elementen eines Heckaufprallsystems miteinander verbunden sind oder, alternativ, unter Verwendung von einem weiteren Mittelträger miteinander verbunden sind, an dem die Führungen der Aufpralldämpfer eines nächsten Dämpfungsgliedpaares angebracht sind, wobei die Gehäuse des weiteren Paares oder des letzten Paares der Aufpralldämpferführungen unter Verwendung von Elementen des Heckaufprallsystems miteinander verbunden sind.

2. Der Satz der Aufpralldämpfer nach Anspruch 1, **dadurch gekennzeichnet, dass** der Satz zusätzlich ein mittleres Paar des Aufpralldämpfers (410) mit den miteinander verbundenen Aufpralldämpfern (410), die zwischen dem Paar von Aufpralldämpfern eines Kupplungssystems (580) positioniert sind, Führungen (340), die unter Verwendung von Elementen des Kupplungssystems (580) miteinander verbunden sind, und ein Paar der Aufpralldämpfer (510) eines hinteren Systems (570), dessen Enden des Gehäuses (530) unter Verwendung von einem Satz von hinteren Profilen (571, 572) miteinander verbunden sind, die mit Verbindern (573) miteinander verbunden sind, umfasst.

3. Der Satz der Aufpralldämpfer nach Anspruch 1, **dadurch gekennzeichnet, dass** jeder Aufpralldämpfer des Dämpferpaares ein verformbares Element aufweist.

4. Der Satz der Aufpralldämpfer nach Anspruch 1, **dadurch gekennzeichnet, dass** jeder Aufpralldämpfer (210, 310, 410, 510) des Dämpferpaares mehr als ein verformbares Element aufweist.

5. Der Satz der Aufpralldämpfer nach Anspruch 1, **dadurch gekennzeichnet, dass** das Gehäuse ein Profil mit einer Querschnittsform ist, die aus einfachen geometrischen Figuren, aus ihren Fragmenten und aus Figuren ausgewählt ist, welche aus einer Kombination von Fragmenten einfacher geometrischer Figuren bestehen.

6. Der Satz der Aufpralldämpfer nach Anspruch 5, **dadurch gekennzeichnet, dass** das verformbare Element (20, 120, 220, 320, 420, 520, 620, 720) ein flaches Profil oder ein Profil mit einer Querschnittsform ist, die aus einfachen geometrischen Figuren, aus ihren Fragmenten und aus einer Kombination von Fragmenten einfacher geometrischer Figuren bestehenden Figuren ausgewählt ist, und so dimensioniert ist, die Bewegung des verformbaren Elements in dem Hohlraum des Gehäuses ermöglicht wird.

7. Der Satz der Aufpralldämpfer nach Anspruch 5 oder 6, **dadurch gekennzeichnet, dass** die Führung (40, 140, 240, 340, 440, 540) ein Profil mit einer Querschnittsform ist, die eine Auswahl aus einfachen geometrischen Figuren, aus ihren Fragmenten und aus einer Kombination von Fragmenten einfacher geometrischer Figuren besteht, und so geformt und dimensioniert ist, dass eine Bewegung der Führungen relativ zum Gehäuse ermöglicht wird.

8. Der Satz der Aufpralldämpfer nach einem der Ansprüche 5 bis 7, **dadurch gekennzeichnet, dass** das verformbare Element (20, 120, 220, 320, 420, 520, 620, 720) ein vorgebogenes Ende (21, 121, 321, 421, 721) aufweist, an dem der Griff (22, 122, 422, 722) befestigt ist.

9. Der Satz der Aufpralldämpfer nach einem der Ansprüche 5 bis 8, **dadurch gekennzeichnet, dass** sich am Auslass (33, 133) des Hohlraums (131, 133) des Gehäuses (30, 130, 230, 330, 430, 530) ein Betätigungselement (32, 132) befindet, um das das verformbare Element (20, 120, 220, 320, 420, 520, 620, 720) gebogen wird.

10. Der Satz der Aufpralldämpfer nach einem der Ansprüche 5 bis 9, **dadurch gekennzeichnet, dass** in dem Hohlraum (131, 133) des Gehäuses (30, 130, 230, 330, 430, 530) ein Führungselement (35, 135) für das verformbare Element (20, 120, 220, 320, 420, 520, 620, 720) versehen ist.

11. Der Satz der Aufpralldämpfer nach einem der Ansprüche 5 bis 10, **dadurch gekennzeichnet, dass** Griffe (38, 48) zum Befestigen von Elementen eines Kupplungssystems oder eines Aufprallsystems an dem Gehäuse (30) des verformbaren Elements (20) und an der Führung (40) befestigt sind.

12. Der Satz der Aufpralldämpfer nach einem der Ansprüche 5 bis 10, **dadurch gekennzeichnet, dass** die Griffe (38, 48) zur Befestigung an diesen Elemente des Gehäuses (30) des verformbaren Elements (20) oder die Führung (40) eines anderen Stoßdämpfers am Gehäuse des verformbaren Elements und an der Führung befestigt sind.

13. Der Satz der Aufpralldämpfer nach einem der Ansprüche 5 bis 10, **dadurch gekennzeichnet, dass** das Gehäuse (130) des verformbaren Elements (120) mehr als einen Hohlraum aufweist, in dem jeweils das verformbare Element (120) positioniert ist und mit seinem ersten Ende (121) an einer Führung (140) verschiebbar, relativ zum Gehäuse, (130) befestigt ist.

## Revendications

1. Un ensemble d'atténuateurs d'impact comprenant au moins deux atténuateurs d'impact connectés ensemble, chacun comprenant un élément déformable avec une première extrémité et une seconde extrémité ainsi qu'un système de déformation de l'élément déformable ayant un logement à espace creux et un guide se déplaçant le long du logement, où l'élément déformable (20, 120 , 220, 320) est positionné dans un espace creux (31, 131) du boîtier (30, 130, 230, 330) et l'élément déformable (20, 120, 220, 320) à la première extrémité (21, 121, 321) se trouvant à l'extérieur de l'espace creux (31, 131) du boîtier (30, 130, 230, 330) possède une poignée (22, 122) de fixation au guide (40, 140, 240, 340), tandis que l'autre extrémité (23, 123) de l'élément déformable (20 , 120, 220, 320) est libre et il y a un coude avec une zone de déformation (24, 124) entre la première extrémité (21, 121, 321) et la deuxième extrémité (23, 123) de l'élément déformable (20, 120, 220, 320) où il y a un élément déformable (20, 120, 220, 320) qui se déplace pendant l'avancement de l'élément déformable (20, 120, 220, 320) depuis le boîtier (30, 130, 230, 330) lors du déplacement du guide (40, 140, 240, 340) par rapport au boîtier (30, 130, 230, 330) de l'élément déformable (20, 120, 220, 320) et chaque section transversale de l'élément déformable (20, 120, 220, 320) à chaque emplacement d'une partie de l'élément déformable avancé (20, 120, 220, 320) est choisie de telle manière que la valeur de la force faisant sortir l'élément déformable (20, 120, 220, 320) du boîtier (30, 130, 230, 330) et effectuant sa déformation à la sortie (33, 133) de l'espace (31, 131) du boîtier (30, 130, 230), 330) est inférieure à la valeur de la force qui briserait l'élément déformable (20, 120, 220, 320), et la section transversale de la partie comprimée du boîtier (30, 130, 230, 330) à chaque emplacement est sélectionnée de manière à ce que la valeur de la force causant la sortie de l'élément déformable (20, 120, 220, 320) du boîtier (30, 130, 230, 330) et sa déformation ayant lieu à la sortie (33, 133) de l'espace vide (31, 131) du boîtier (30, 130, 230, 330) est inférieure à la force qui déformerait le boîtier (30, 130, 230, 330) de l'élément déformable (20, 120, 220, 320), l'ensemble possède des paires d'atténuateurs d'impact connectés en parallèle, des guides (240) d'atténuateurs d'impact (210) formant la première paire, et reliés entre eux par une poutre frontale (271) adaptée pour se connecter avec le système d'attelage (270), les logements (230) de leurs éléments déformables de la première paire d'atténuateurs d'impact sont reliés entre eux par une poutre centrale (375) à laquelle sont fixés les guides (340) des atténuateurs d'impact (310) de la paire d'atténuateurs d'impact suivante, les logements (330) des éléments déformables de la paire suivante des atténuateurs d'impact sont reliés les uns aux autres par les éléments du système d'imapct arrière ou, en alternative, sont reliés les uns aux autres par la poutre centrale suivante à laquelle les guides des atténuateurs d'impact d'une ultérieure paire d'atténuateurs d'impact sont fixés, les logements de la paire suivante ou de la dernière paire d'atténuateurs d'impact étant reliés l'un à l'autre au moyen du système d'impact arrière.

2. L'ensemble d'atténuateurs d'impact selon la revendication 1, **caractérisé en ce que** l'ensemble comprenant en outre une paire centrale d'atténuateurs d'impact (410) ayant des atténuateurs d'impact (410) reliés les uns aux autres et positionnés entre la paire d'amortisseurs de collision du système d'attelage (580), des guides (340) qui sont reliés les uns aux autres à l'aide du système d'attelage (580), et une paire d'atténuateurs d'impact (510) du système arrière (570) dont les extrémités des boîtiers (530) sont reliées entre elles à l'aide d'un ensemble de poutres arrières (571, 572) reliées les unes aux autres par des connecteurs (573).

3. L'ensemble d'atténuateurs d'impact selon la revendication 1 **caractérisé en ce que** chaque atténuateur d'impact de collision de la paire d'atténuateurs d'impact possède un élément déformable.

4. L'ensemble d'atténuateurs d'impact selon la revendication 1 **caractérisé en ce que** chaque atténuateur d'impact (210, 310, 410, 510) de la paire d'atténuateurs d'impact possède plus d'un élément déformable.

5. L'ensemble d'atténuateurs d'impact selon la revendication 1 **caractérisé en ce que** le boîtier est un profil de forme en coupe choisie parmi de simples figures géométriques, de leurs fragments et de figures constituées d'une combinaison de fragments de figures géométriques simples.

6. L'ensemble d'atténuateurs d'impact selon la revendication 5 **caractérisé en ce que** l'élément déformable (20, 120, 220, 320, 420, 520, 620, 720) est un plat ou un profil de forme en coupe choisie parmi des figures géométriques simples, parmi leurs fragments et parmi des figures constituées d'une combinaison de fragments de figures géométriques simples et de dimensions permettant le déplacement de l'élément déformable dans l'espace vide du boîtier.

7. L'ensemble d'atténuateurs d'impact selon la revendication 5 **caractérisé en ce que** le guide (20, 120, 40, 140, 240, 340, 440, 540) est un profil à la coupe transversale choisie parmi des figures géométriques simples, parmi leurs fragments et parmi des figures constituées d'une combinaison de fragments de figures géométriques simples et à la forme et aux dimensions permettant le déplacement de l'élément déformable dans l'espace vide du boîtier.

8. L'ensemble d'atténuateurs d'impact selon l'une des revendications de 5 à 7, **caractérisé en ce que** l'élément déformable (20, 120, 220, 320, 420, 520, 620, 720) possède une extrémité préliminairement pliée (21, 121, 321, 421, 721) à laquelle est fixée une poignée (22, 122, 422, 722).

9. L'ensemble d'atténuateurs d'impact selon l'une des revendications de 5 à 8, **caractérisé en ce que** à la sortie (33, 133) de l'espace vide (131, 133) du boîtier (30, 130, 230, 330, 430, 530) est placé un élément de rappel (32, 132) autour duquel est plié l'élément déformable (20, 120, 220, 320, 420, 520, 620, 720).

10. L'ensemble des atténuateurs d'impact selon l'une des revendications de 5 à 9, **caractérisé en ce que** dans l'espace vide (131, 133) du boîtier (30, 130, 230, 330, 430, 530) se trouve un élément de guidage (35, 135) pour l'élément déformable (20, 120, 220, 320, 420, 520, 620, 720).

11. L'ensemble d'atténuateurs d'impact selon l'une des revendications de 5 à 10, **caractérisé en ce que** les poignées (38, 48) pour la fixation des éléments du système d'attelage ou du système d'impact sont fixées au boîtier (30) de l'élément déformable (20) et au guide (40).

12. L'ensemble d'atténuateurs d'impact selon l'une des revendications de 5 à 10, **caractérisé en ce que** les poignées (38, 48) pour la fixation des éléments du boîtier (30) de l'élément déformable (20) ou du guide (40) d'un autre atténuateur d'impact sont fixées à l'élément déformable et au guide.

13. L'ensemble d'atténuateurs d'impact selon l'une des revendications de 5 à 10, **caractérisé en ce que** le boîtier (130) de l'élément déformable (120) a plus d'un espace vide dans lequel se trouve l'élément déformable (120) fixé par une première extrémité (121) à un guide (140) déplaçable par rapport au boîtier (130).
